# EUROPEAN PATENT APPLICATION

(11) **EP 1 238 689 A2**
(43) Date of publication of application: **11.09.2002**
(21) Application number: 02004952.4
(22) Date of filing: 05.03.2002
(51) Int. Cl.: A63F 13/10

(54) **Uniform media portal for a gaming system**

(30) Priority: 09.03.2001 US 802509
(71) Applicant: MICROSOFT CORPORATION, Redmond, Washington 98052-6399 (US)
(72) Inventor: Blanco, Victor, Keith, Bothel, WA 98011 (US)
(74) Representative: Grünecker, Kinkeldey, Stockmair & Schwanhäusser Anwaltssozietät

(57) **Abstract**

A uniform media portal model for a gaming system promotes a consistent user experience among various entertainment areas. The media portal model offers a convenient way to access content from multiple different media types―game data, audio data, and video data―regardless of what media type is inserted into the gaming system's portable media drive.

## Description

### COPYRIGHT NOTICE

A portion of the disclosure of this patent document contains material which is subject to copyright protection. The copyright owner has no objection to the facsimile reproduction by anyone of the patent document or the patent disciosure, as it appears in the Patent and Trademark Office patent file or records, but otherwise reserves all copyright rights whatsoever.

### TECHNICAL FIELD

This invention relates to gaming systems, and more particularly, to user interface models that facilitate user interaction with the gaming systems.

### BACKGROUND

Gaming systems currently available on the market are capable of playing game discs, music CDs, and movie DVDs from a disc drive. For example, the Playstation® 2 gaming system from Sony Corporation provides the ability to play games, music, and video titles from a disc inserted in the console. These gaming systems are designed to play whatever title is in the disc drive. Thus, when a user inserts a disc into the drive, the gaming system simply provides the ability to "play" or "launch" the title regardless of whether the disc is a game, movie, or music disc. In this manner, the media currently in the drive defines the default context of the user interface (UI) presented to the user.

Microsoft Corporation recently announced its Xbox™ gaming system that is equipped with a hard disk drive to enhance gaming, and broadband connectivity to facilitate online gaming. With these additions, various titles for games, movies, and music can be played from many different sources including the hard disk drive, portable media (e.g., CD, DVD, game disc), controller-based memory units, or online sources. With these improved capabilities, the conventional UI model that defaults to a "play" or "launch" metaphor based on the media type in the disc drive is now too vague. For instance, does the user want to play the game disc in the portable media drive, or an audio file that is stored on the hard disk, or a movie streamed from an online source?

Accordingly, there is a need for an improved UI model for gaming systems that provides uniform user experience across the various media types.

### SUMMARY

A uniform media portal model for a gaming system promotes a consistent user experience among various entertainment areas. The media portal model offers a convenient way to access content from multiple different media types― game data, audio data, and video data―regardless of the media type inserted into the gaming system's portable media drive.

In the described implementation, the gaming system includes a game console and one or more controllers. The game console is equipped with a hard disk drive, a portable media drive, and broadband connectivity. The uniform media portal is implemented as a console application stored on the hard disk drive and loaded when the game console is powered on.

The console application presents a main menu identifying five primary areas: games, music, movies, memory, and settings. Conceptually, beneath the main menu, the content stored on the various memory devices is logically presented according to media type. Navigation to the games area, for example, results in a menu that lists a collection of game titles available to be played on the game console. Navigation to the music and movies areas results in a very similar experience in that the user is presented with collections of music titles and movie titles.

The titles are displayed uniformly, regardless of whether they are stored on the hard drive, a portable medium (e.g., game disc, CD, or DVD) in the disc drive, at an online source, or on a memory unit (MU). Grouping the content by media type and presenting collection-based menus for each media type provides a consistent look and feel across the game, music, and movie areas. Once the user has selected a specific area, additional UI screens offer choices that are specialized to the particular media type.

### BRIEF DESCRIPTION OF THE DRAWINGS

Fig. 1 illustrates a gaming system that implements uniform media portal architecture.

Fig. 2 is a block diagram of the gaming system.

Fig. 3 illustrates a network gaming system in which the Fig. 1 gaming system is connected via a network to other consoles and services.

Fig. 4 illustrates a navigation hierarchy employed by the uniform media portal architecture.

Fig. 5 is a flow diagram of an initial system level evaluation process executed when the gaming system is initially powered on.

Fig. 6 is a flow diagram of a media level evaluation process that is executed after the system level evaluation process.

Fig. 7 illustrates a graphical user interface depicting the main menu of the gaming system.

Fig. 8 is a flow diagram of the main menu navigation process that is performed after the system level and media level evaluation processes are completed.

Fig. 9 illustrates a graphical user interface depicting a games collection menu that is accessible from the main menu.

Fig. 10 illustrates a graphical user interface depicting a games option menu that is accessible from the games collection menu.

Fig. 11 illustrates a graphical user interface depicting an exemplary screen display that can be exploited by title developers to present title-specific information.

Fig. 12 illustrates a graphical user interface depicting a music collection menu that is accessible from the main menu.

Fig. 13 illustrates a graphical user interface depicting a music player that is accessible from the music collection menu.

Figs. 14 and 15 illustrate graphical user interfaces depicting screen displays used to assist the user in creating a soundtrack.

Fig. 16 illustrates a graphical user interface depicting a memory collection menu that is accessible from the main menu.

Fig. 17 illustrates a graphical user interface depicting a memory contents menu that is accessible from the memory collection menu.

Fig. 18 illustrates a graphical user interface depicting a file options menu that is accessible from the memory contents menu.

Fig. 19 illustrates a graphical user interface depicting a settings collection menu that is accessible from the main menu.

Fig. 20 illustrates a graphical user interface depicting a clock settings menu that is accessible from the settings collection menu.

Fig. 21 illustrates a graphical user interface depicting a language settings menu that is accessible from the settings collection menu.

Fig. 22 illustrates a graphical user interface depicting an audio settings menu that is accessible from the settings collection menu.

Fig. 23 illustrates a graphical user interface depicting a video settings menu that is accessible from the settings collection menu.

Fig. 24 illustrates a graphical user interface depicting a parental control settings menu that is accessible from the settings collection menu.

### DETAILED DESCRIPTION

The following discussion is directed to a uniform media portal model for a gaming system that promotes a consistent user experience among various entertainment areas (e.g., gaming, movie playback, music playback). The uniform media portal model addresses the problem of adding a large hard disk to a gaming system where the storage devices have typically been small, removable memory units. With the additional space, a user can store persistent data on the hard disk relating to game titles, music files, and video files.

Generally, the uniform media portal model offers a consistent graphical user interface and an intuitive media-themed navigation hierarchy that logically portrays the contents of the game console according to media types (e.g., game data, video data, audio data, etc.). The model offers a clear distinction among multiple available media types stored on various memory devices (e.g., hard disk drive, portable media drive, portable memory units), regardless of what media type is currently loaded into the game console's portable disc drive. The model further provides a user interface that graphically depicts the various memory devices and their respective capacities.

### Gaming System

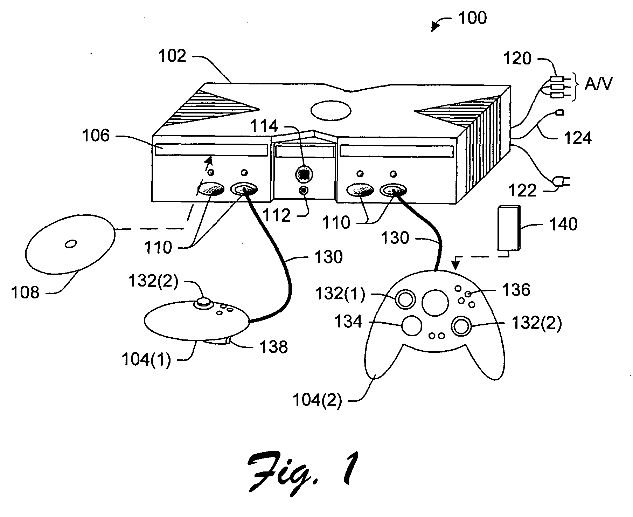

Fig. 1 shows an exemplary gaming system 100. It includes a game console 102 and up to four controllers, as represented by controllers 104(1) and 104(2). The game console 102 is equipped with an internal hard disk drive and a portable media drive 106 that supports various forms of portable storage media as represented by optical storage disc 108. Examples of suitable portable storage media include DVD, CD-ROM, game discs, and so forth.

The game console 102 has four slots 110 on its front face to support up to four controllers, although the number and arrangement of slots may be modified. A power button 112 and an eject button 114 are also positioned on the front face of the game console 102. The power button 112 switches power to the game console and the eject button 114 alternately opens and closes a tray of the portable media drive 106 to allow insertion and extraction of the storage disc 108.

The game console 102 connects to a television or other display (not shown) via A/V interfacing cables 120. A power cable 122 provides power to the game console. The game console 102 may further be configured with broadband capabilities, as represented by the cable or modem connector 124 to facilitate access to a network, such as the Internet.

Each controller 104 is coupled to the game console 102 via a wire or wireless interface. In the illustrated implementation, the controllers are USB (Universal Serial Bus) compatible and are connected to the console 102 via serial cables 130. The controller 102 may be equipped with any of a wide variety of user interaction mechanisms. As illustrated in Fig. 1, each controller 104 is equipped with two thumbsticks 132(1) and 132(2), a D-pad 134, buttons 136, and two triggers 138. These mechanisms are merely representative, and other known gaming mechanisms may be substituted for or added to those shown in Fig. 1.

A memory unit (MU) 140 may be inserted into the controller 104 to provide additional and portable storage. Portable memory units enable users to store game parameters and port them for play on other consoles. In the described implementation, each controller is configured to accommodate two memory units 140, although more or less than two units may be employed in other implementations.

The gaming system 100 is capable of playing, for example, games, music, and videos. With the different storage offerings, titles can be played from the hard disk drive or the portable medium 108 in drive 106, from an online source, or from a memory unit 140. A sample of what the gaming system 100 is capable of playing back include:
1. Game titles played from CD and DVD discs, from the hard disk drive, or from an online source.
2. Digital music played from a CD in the portable media drive 106, from a file on the hard disk drive (e.g., Windows Media Audio (WMA) format), or from online streaming sources.
3. Digital audio/video played from a DVD disc in the portable media drive 106, from a file on the hard disk drive (e.g., Active Streaming Format), or from online streaming sources.

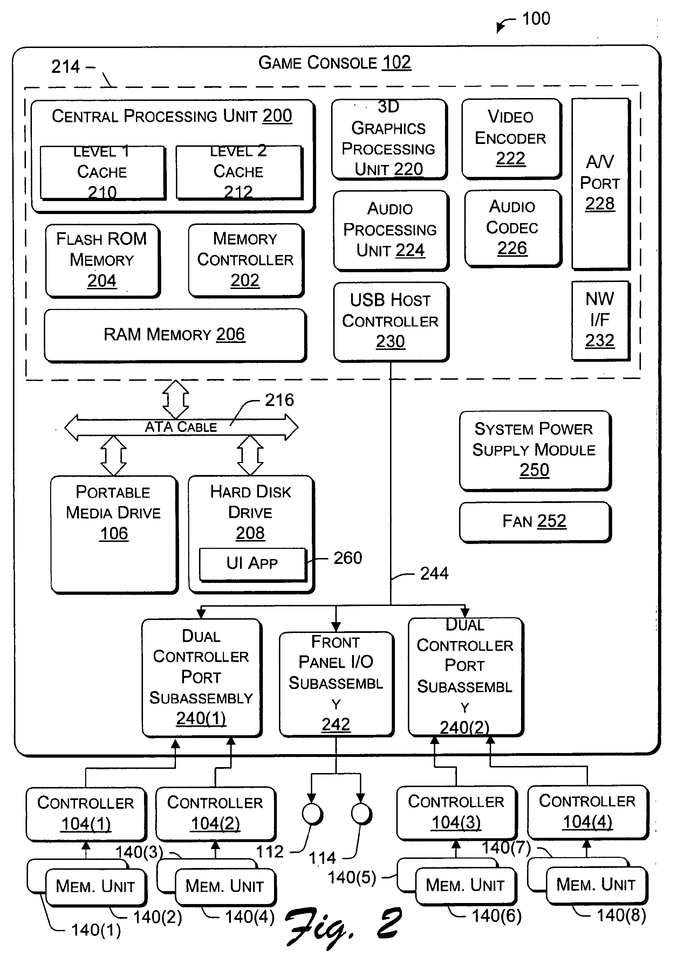

Fig. 2 shows functional components of the gaming system 100 in more detail. The game console 102 has a central processing unit (CPU) 200 and a memory controller 202 that facilitates processor access to various types of memory, including a flash ROM (Read Only Memory) 204, a RAM (Random Access Memory) 206, a hard disk drive 208, and the portable media drive 106. The CPU 200 is equipped with a level 1 cache 210 and a level 2 cache 212 to temporarily store data and hence reduce the number of memory access cycles, thereby improving processing speed and throughput.

The CPU 200, memory controller 202, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

As one suitable implementation, the CPU 200, memory controller 202, ROM 204, and RAM 206 are integrated onto a common module 214. In this implementation, ROM 204 is configured as a flash ROM that is connected to the memory controller 202 via a PCI (Peripheral Component Interconnect) bus and a ROM bus (neither of which are shown). RAM 206 is configured as multiple DDR SDRAM (Double Data Rate Synchronous Dynamic RAM) that are independently controlled by the memory controller 202 via separate buses (not shown). The hard disk drive 208 and portable media drive 106 are connected to the memory controller via the PCI bus and an ATA (AT Attachment) bus 216.

A 3D graphics processing unit 220 and a video encoder 222 form a video processing pipeline for high speed and high resolution graphics processing. Data is carried from the graphics processing unit 220 to the video encoder 222 via a digital video bus (not shown). An audio processing unit 224 and an audio codec (coder/decoder) 226 form a corresponding audio processing pipeline with high fidelity and stereo processing. Audio data is carried between the audio processing unit 224 and the audio codec 226 via a communication link (not shown). The video and audio processing pipelines output data to an A/V (audio/video) port 228 for transmission to the television or other display. In the illustrated implementation, the video and audio processing components 220-228 are mounted on the module 214.

Also implemented on the module 214 are a USB host controller 230 and a network interface 232. The USB host controller 230 is coupled to the CPU 200 and the memory controller 202 via a bus (e.g., PCI bus) and serves as host for the peripheral controllers 104(1)-104(4). The network interface 232 provides access to a network (e.g., Internet, home network, etc.) and may be any of a wide variety of various wire or wireless interface components including an Ethernet card, a modem, a Bluetooth module, a cable modem, and the like.

The game console 102 has two dual controller support subassemblies 240(1) and 240(2), with each subassembly supporting two game controllers 104(1)-104(4). A front panel I/O subassembly 242 supports the functionality of the power button 112 and the eject button 114, as well as any LEDs (light emitting diodes) or other indicators exposed on the outer surface of the game console. The subassemblies 240(1), 240(2), and 242 are coupled to the module 214 via one or more cable assemblies 244.

Eight memory units 140(1)-140(8) are illustrated as being connectable to the four controllers 104(1)-104(4), i.e., two memory units for each controller. Each memory unit 140 offers additional storage on which games, game parameters, and other data may be stored. When inserted into a controller, the memory unit 140 can be accessed by the memory controller 202.

A system power supply module 250 provides power to the components of the gaming system 100. A fan 252 cools the circuitry within the game console 102.

The game console 102 implements a uniform media portal model that provides a consistent user interface and navigation hierarchy to move users through various entertainment areas. The portal model offers a convenient way to access content from multiple different media types―game data, audio data, and video data―regardless of the media type inserted into the portable media drive 106.

To implement the uniform media portal model, a console user interface (UI) application 260 is stored on the hard disk drive 208. When the game console is powered on, various portions of the console application 260 are loaded into RAM 206 and/or caches 210, 212 and executed on the CPU 200. The console application 260 presents a graphical user interface that provides a consistent user experience when navigating to different media types available on the game console. The UI application and exemplary screen displays it presents are described below in more detail beneath the headings "Uniform Media Portal" and "Operation".

The gaming system 100 may be operated as a standalone system by simply connecting the system to a television or other display. In this standalone mode, the gaming system 100 allows one or more players to play games, watch movies, or listen to music. However, with the integration of broadband connectivity made available through the network interface 232, the gaming system 100 may further be operated as a participant in a larger network gaming community. This network gaming environment is described next.

### Network Gaming

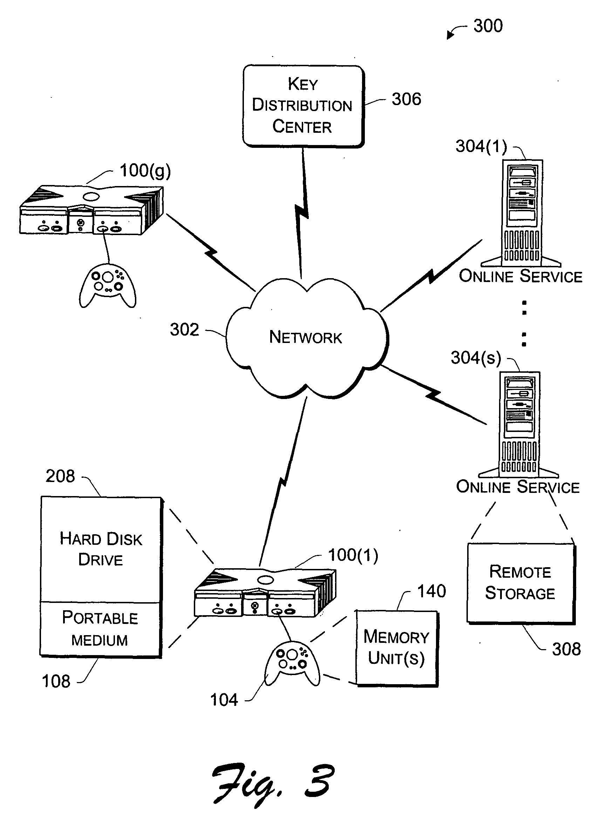

Fig. 3 shows an exemplary network gaming environment 300 that interconnects multiple gaming systems 100(1), ..., 100(g) via a network 302. The network 302 represents any of a wide variety of data communications networks. It may include public portions (e.g., the Internet) as well as private portions (e.g., a residential Local Area Network (LAN)), as well as combinations of public and private portions. Network 302 may be implemented using any one or more of a wide variety of conventional communications media including both wired and wireless media. Any of a wide variety of communications protocols can be used to communicate data via network 302, including both public and proprietary protocols. Examples of such protocols include TCP/IP, IPX/SPX, NetBEUI, etc.

In addition to gaming systems 100, one of more online services 304(1), ..., 304(s) may be accessible via the network 302 to provide various services for the participants, such as hosting online games, serving downloadable music or video files, hosting gaming competitions, serving streaming audio/video files, and the like. The network gaming environment 300 may further involve a key distribution center 306 that plays a role in authenticating individual players and/or gaming systems 100 to one another as well as online services 304. The distribution center 306 distributes keys and service tickets to valid participants that may then be used to form games amongst multiple players or to purchase services from the online services 304.

The network gaming environment 300 introduces another memory source available to individual gaming systems 100―online storage. In addition to the portable storage medium 108, the hard disk drive 208, and the memory unit(s) 140, the gaming system 100(1) can also access data files available at remote storage locations via the network 302, as exemplified by remote storage 308 at online service 304(s).

The uniform media portal model accommodates the network gaming environment. As an example, when a user purchases a game, the model can provide the user with navigation points for downloading upgrades for that game and viewing high scores online specific to the game title.

### Uniform Media Portal

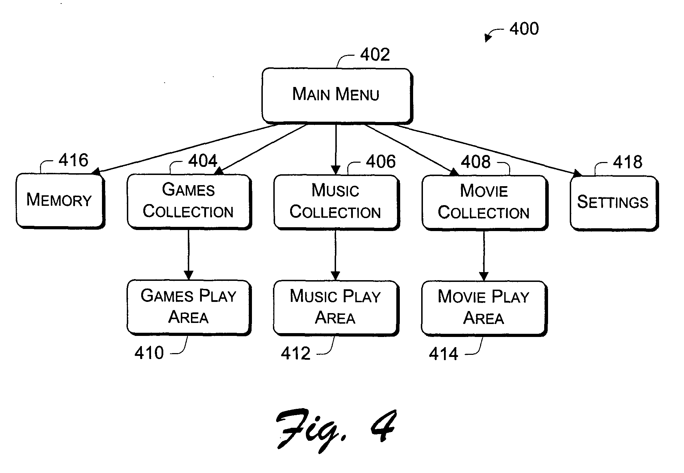

Figs. 4 shows the uniform media portal model 400. It provides main menu 402 that acts as a common interface for multiple media types, including game media, movie media, and music media. The main menu 402 presents the user with a set of navigation choices that accurately describe what they would like to interact with on their console. This top-level menu is a simple representation of the three primary entertainment areas available on the console, thus presenting the following choices:
- Games: This entertainment area pertains to a user's game experience and gaming media.
- Music: This entertainment area is dedicated to the music context and audio media.
- Movies: This entertainment area relates to a user's movie experience and video media.

The model's navigation hierarchy follows the media theme. Beneath the main menu 402 are collections of titles that pertain to their particular media types currently available to the user. In this example, a user can navigate from the main menu 402 to a games collection 404 that lists currently available game titles. Navigation may also be made to a music collection 406 that groups available music titles and a movie collection 408 that groups available movie titles. By constructing the hierarchy in terms of media type, the user is intuitively presented with titles within any given entertainment area. The titles within the various areas may be stored in any one of many storage locations, but such detail is not immediately revealed. Thus, the uniform media portal model 400 offers a coherent way to access multiple media types regardless of the media type inserted into the gaming system's portable media drive.

Area specific features, such as high scores on a game or how to play a movie, are left for lower levels of the model 400. Thus, beneath each collection is the specific play area that pertains to the particular media experience. A games play area 410 is navigated through the games collection 404, a music play area 412 is accessed through the music collection 406, and a movies play area 414 is navigated through the movie collection 408. This organization of the model allows users to select the context of the media type. This model thus provides a high-level "filter" on the kinds of media available on the console, and what operations may be performed with respect to the media.

The model 400 also accommodates system areas, including a memory area 416 and a settings area 418. The memory area 416 allows users to view memory contents and manage the memory devices in the console. The settings area 418 allows users to preview currently set options, as well as adjust the settings as desired.

### Operation

The console application 260, which implements the uniform media portal model 400, is stored in the hard disk drive 208 of the console 102. The console application 260 is-loaded each time the console is powered on. When power is initially applied and before presenting the main menu or loading a title, the console application 260 runs through a startup cycle that performs a number of checks occur in sequence, including a system level check and a media level check.

Fig. 5 illustrates a system level evaluation process 500 that is performed every time the console is powered on. The process 500 is implemented in software and hence the operations shown as blocks represent computer-executable instructions that are executed by the CPU 200.

At block 502, a first system level check is made to determine whether the initial boot code stored in ROM 204 recognizes the hard disk drive 208. If not (i.e., the "No" branch from block 502), the user is notified that the console is unusable via a static graphic image, audible noise, or some other type of warning (block 504). At this point, there are no further messages and the console 102 will not continue to boot.

If the hard disk is recognized (i.e., the "Yes" branch from block 502), a second system level check evaluates whether the language on the console has been set (block 506). If this returns false (i.e., the "No" branch from block 506), it is either the first time the user has powered up the console, or the console has been serviced, refurbished, or possibly even rented and the language value reset. In this situation, the console application 260 presents a language selection screen for the user to select an appropriate language from among those languages available on the console (block 508). Selection is made by actuating a button or mechanism on the controller 104, such as the "A" button.

Assuming the language is set (i.e., the "Yes" branch from block 506), the next system level check determines whether the clock is set (block 510). A false return (i.e., the "No" branch from block 510) represents a situation where the user power up the console for the very first time, or a situation where the system battery has died. In such situations, the application 260 presents an initial clock setup screen based on the selected language (block 512). The clock setup screen allows the user to navigate between and adjust the different time and date values on the console. These choices are committed by actuating a controller mechanism, such as the "A" button.

If the clock is set (i.e., the "Yes" branch from block 510), the next system level check is to evaluate whether a direct entry point into the console is desired (block 514). This situation may arise, for example, if there is insufficient space to save a game. If this returns true, the console ignores what is currently in the portable media drive 106 and boots directly to the console UI application 260 with some set parameter values (clear how much space, etc) (block 516). Upon completion of the system level checks, the console 102 continues powering up and performs another set of checks based on the media in the portable media drive 106.

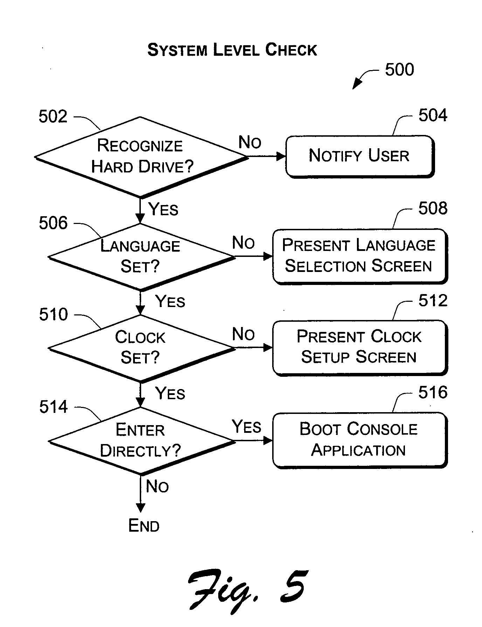

Fig. 6 illustrates a media level evaluation process 600 that is performed following the system level checks. The process 600 is implemented in software and hence the operations shown as blocks represent computer-executable instructions that are executed by the CPU 200.

At block 602, a first media level check is conducted to discern whether a game disc in the portable media drive 106. If a game disc is inserted (i.e., the "Yes" branch from block 602), a security and certification process is performed to ensure that the title is a valid game (block 604). As part of this process, the console determines whether the game disc has a later version of the console UI application 260. If a newer version exists, a progress indicator graphic is presented to inform the user that a newer version of the UI application 260 is being copied to the hard disk drive 208. At block 606, the game disc is immediately loaded and the title is given full control of the console 102. In this manner, the title developer is allowed to dictate what user experience should occur next, such as beginning the game immediately, or presenting a UI screen that exhibits the game features.

Conversely, if a game disc is not present in the portable media drive (i.e., the "No" branch from block 602), a next media level check evaluates whether a movie disc is inserted into the portable media drive 106 (block 608). If this test returns true (i.e., the "Yes" branch from block 608), the console UI application 260 is loaded and the user is immediately navigated to the movie playback area 414 (block 610). The movie is then played full screen (block 612).

In another implementation, the game console may be configured to require a playback dongle to allow video playback. In this implementation, a secondary check can be made to ensure that the playback dongle is currently plugged into a controller port. If the dongle is plugged in, the check is successful and the movie begins to play full screen. If the dongle is not plugged in, the UI application is loaded and the user is presented with a status message notifying them that they need the dongle to enable playback of the movie.

If neither a game disc nor a movie disc is in the portable media drive (i.e., the "No" branch from block 608), the next media level check is to ascertain whether an audio disc is inserted into the portable media drive (block 614). If so (i.e., the "Yes" branch from block 614), the console UI application 260 is loaded and the user is immediately navigated to the music playback area 412 (block 616). The music disc is then played (block 618).

If an audio disc is not present (i.e., the "No" branch from block 614), the next media level check is to determine whether an unrecognized disc is in the drive 106 (block 620). If so (i.e., the "Yes" branch from block 620), the console UI application 260 is loaded and the user is presented with a status message notifying them that an invalid disc is in the console drive (block 622). This message can be dismissed, and the user is presented with the main menu 402.

If there is no media in the portable media drive 106 (i.e., the "No" branch from block 620), the console UI application 260 is loaded and the main menu is presented (block 624).

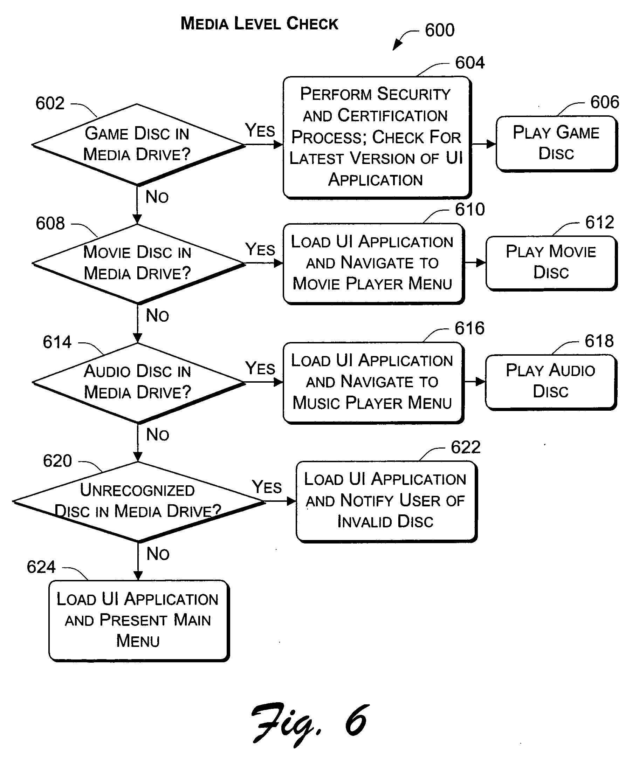

Fig. 7 shows an exemplary graphical user interface 700 that can be presented as the main menu 402 of the uniform media portal model 400. The main menu UI 700 is generated by the console UI application 260 and depicted on the television or other display. The main menu UI 700 contains the five menu elements: a games element 702, a music element 704, a movies element 706, a memory element 708, and a setting element 710. These elements provide the navigation entry points for the five level-one areas of the uniform media portal model 400, namely, the games collection 404, the music collection 406, the movie collection 408, the memory 416, and the settings 418. Environmental background audio may be played when entering the main menu to further enhance the user environment.

The focus on the main menu UI 700 is initially placed on the games element 702, but other default positions may be alternatively employed. Any of the four controllers 104(1)-104(4) may be used to navigate the console user interface. The main menu is navigated from left to right with any of the connected controller joysticks. "D-pad" and left analog joystick actions are treated the same. The console UI application 260 recognizes all button presses and joystick movements from every controller 104, so moves from multiple joysticks simultaneously may result in a "tug-of-war" navigation. In one implementation, the navigation does not wrap once the user has reached the far left or right extent of the main menu UI 700, thus attempting to move right once the user has reached the settings element 710 or to move left once the user has reached the games element 702 will have no effect.

A select element 712 allows the user to select the focused element from among the five main menu elements 702-710. The "A" button on the controller is used to control the select element 712, and hence the graphical select element 712 illustrates an "a" within the element. Upon selection, the console UI application navigates to the selected area.

The game console 102 is equipped with a screensaver that dims the screen after ten minutes of inactivity. Any input from the four controller ports will disable the screensaver and return the user to the current interface. The screensaver is disabled in the movie player and music player screens during playback.

Fig. 8 illustrates the main menu navigation process 800 in more detail. The process 800 is implemented in software as computer-executable instructions that are executed by the CPU 200 to perform the operations illustrated as blocks.' The process generally discerns which main menu element is selected and navigates to the selected area.

At block 802, the console application 260 determines whether the games element 702 is selected. If so (i.e., the "Yes" branch from block 802), the console application 260 navigates to the games collection 404 and presents a games collection menu (block 804).

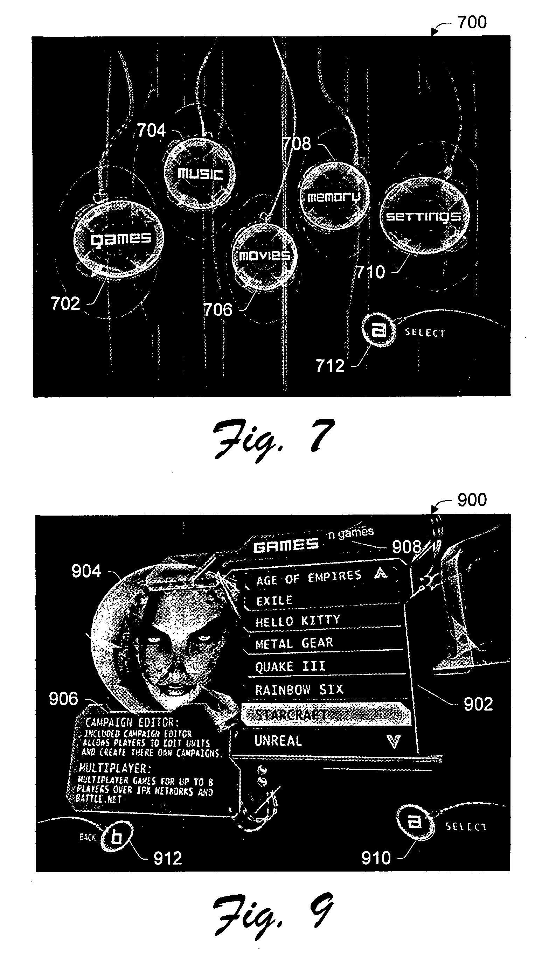

Fig. 9 illustrates an exemplary games collection menu 900 that is presented upon selection of the games element 702 in the main menu UI 700. The games collection is the area where the user can select from available game titles they have previously played on their console. The games collection menu 900 includes a list 902 of the available game titles in the games area. A game is a title that has been purchased, borrowed, or rented by the user and played on their console at least one time. In Fig. 9, the games titles are shown in horizontal tiles or panes. It is noted that other graphical themes may be alternatively used to represent available games, such as a bookshelf, a toy box, or the like.

The games collection menu 900 also includes an orb 904 depicting an image of the currently selected game title and a metatext panel 906 with small snippets of information about the current game title. In the illustrated example, the game "Starcraft" is highlighted, resulting in an image of a character from the game "Starcraft" being depicted in orb 904 and information pertaining to this game being presented in panel 906. The game developer is given control of the contents of the orb 904 and metatext panel 906, so the information will vary from one game title to another.

A piece of descriptive text 908 (i.e., "n games") is positioned beside the main legend "Games" to indicate the number of titles in the game collection. The list 902 displays a limited number of game titles (e.g., eight titles). When a user first enters the games collection after purchasing their console, there will be zero titles in the game collection. To represent this, the descriptive text 908 states "0 games" and the metatext panel 906 offers a short statement telling the user that future games played on the console will appear in this area. As the user plays games, they are added to the list 902. When the descriptive text 908 indicates that there are more games than shown on list 902 (e.g., n > 8), up/dow scroll arrows are added to the list 902 to indicate that there are additional titles not currently shown on the list.

As noted above, the game developer provides the games collection metadata used to fill the orb 904 and panel 906. When the user plays a game title on the console for the first time, a number of metadata elements are copied into the title's persistent data area on the hard disk drive 208. Exemplary metadata elements for this area include:
- A 256x256 pixel Direct3D texture image that accurately represents the game title to be displayed in both the games collection and the memory area.
- A text file that contains a series of heading/body pairs that will slowly scroll in a loop within the metatext panel 906. The format for this file follows:

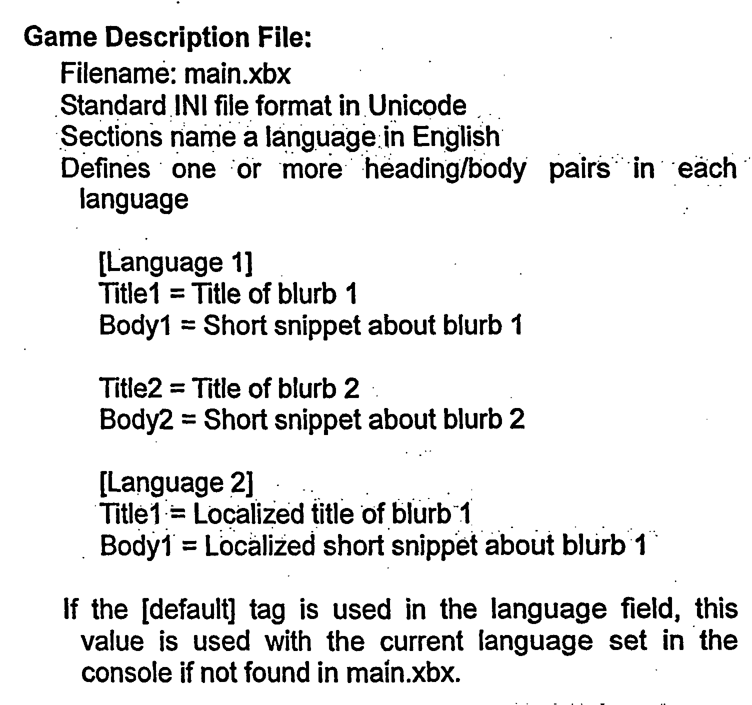

The user can move among game titles in list 902 by using the up and down directions of the joystick, or some other pre-defined control mechanism. The list 902 may be configured to wrap or not wrap when the user reaches the top or the bottom of the list. A select element 910 allows the user to select the highlighted title from list 902 using the "A" button on the controller. Selection of a game title navigates the user to a games option menu. A back element 912 facilitates navigation back to the main menu UI 700. The back element 912 is chosen by pressing the "B" button on the controller, as visually aided by the letter "b" in the element 912.

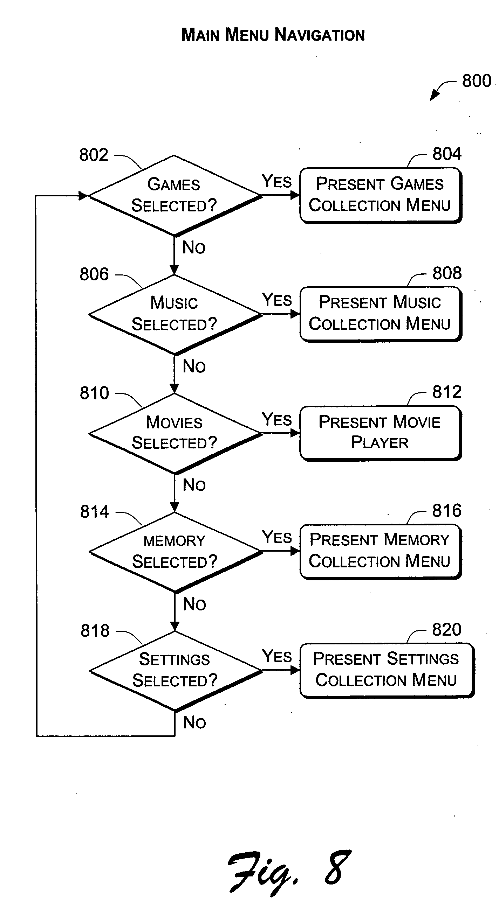

Fig. 10 illustrates an exemplary games option menu 1000 that is presented upon selection of a game title in the games collection menu 900. The game options menu 1000 provides users with options that are currently available for the selected title. The menu includes a list 1002 of the available options for the selected title, an orb 1004 containing the image of the currently selected game image, and a metatext panel 1006 for small snippets of information about the currently selected option. A select element 1008 and a back element 1010 are also provided to facilitate navigation from the game options menu 1000.

In the illustrated example, the listed options are "High Scores", "New Game", "Saved Game", "Tips", and "Updates". These options are presented for every title that has been played on the console. The user can move among the available game options by using, for example, the up and down directions of the joystick to traverse the list 1002. Pressing the "B" button in the game options navigates the user back to the games collection menu 900 of Fig. 9. Pressing the "A" button in the game options navigates the user into the appropriate display for the currently selected option.

Fig. 11 shows an exemplary high scores screen 1100 that is presented upon selection of the "High Scores" option in the games option menu 1000 of Fig. 10. The high scores screen 1100 includes a list 1102 of the top scores and an orb 1104 depicting the same game image. A select element 1106 and a back element 1108 facilitate navigation from the high score screen 1100.

The top scores depicted in list 1102 may represent the top local users for a specific game title, or rankings from top players in the world (if such statistics are available from an online source). The list 1102 may also be scrollable if more than ten scores are available. For instance, the game console may store the top 100 scores for each title, and present ten of the scores at a time in the scrollable list.

Notice that the various screens in the games collection area carry the same graphical themes. Lists 902, 1002, and 1102 are visually similar, and orbs 904, 1004, and 1104 present the same gaming image. The common presentation theme aids the user during navigation, enhancing the user experience.

With reference again to the games option menu 1000 in Fig. 10, the "New Game" option aids the user in starting a new game in the game console. When the new game option is selected, the metatext panel 1006 notifies the user that this option is specifically for starting directly into a new game. The console UI application 260 presents a message window instructing the user to place the new game disc in the portable media drive 106. At the same time, the tray of the portable media drive 106 is automatically opened to receive the new game disc. Upon insertion, the title is automatically launched into a new game. If the user accidentally inserts the incorrect disc, the title of the disc loads normally and the instruction to immediately start a new game is ignored.

When the "Saved Game" option is highlighted, the metatext panel 1006 notifies the user that this option is specifically for launching directly into a previously saved game, or performing other saved game functions. Once the "Saved Game" option is selected, the user is presented with a more robust list of all saved games for the selected title from every memory unit connected to the game console 102 (e.g., hard disk drive and memory unit(s)). The user may perform a single select or multi-select on the saved games. Selection of a saved game brings up a menu allowing the user to "play", "copy", or "delete" the saved game. If the option to "play" a saved game is chosen, the user is presented with a message window that notifies the user to place the appropriate game disc in the portable media drive 106, and the tray is opened automatically. Upon insertion, the title automatically launches into the previously selected saved game. If the user accidentally inserts the incorrect disc, the title loads normally and the instruction to immediately start a previously saved game is ignored.

The "Tips" option slowly exposes cheats and tips that users can decide to enable during game play to assist them in playing the game or possibly prolong the playability of a game title. These tips may reside on the game disc, along with rules for exposing them over time, or at a remote site accessible via the network. Whether tips are provided, and the extent to which they are provided, are left to the discretion of the game developer.

The "Updates" option allows users to download the latest versions, statistics, patches, track packs, etc. with a single controller button. Another possible option not shown in Fig. 10 is a"Remove" option that provides users a way to completely remove all data for a particular game title from the hard disk drive 208. A warning message window with confirmation from the user is presented to notify the user that all associated data and saved games will be completely removed from the game console (but not from any memory units in the game controllers). Upon confirmation of the action, all of the game data is removed from the hard disk, and the user is returned to the game collection menu 900 in Fig. 9 with the title removed from the games list 902.

The gaming system further supports other options that game developers may wish to include. A game title can extend the available options (e.g., up to 30 additional options) by providing a MENU.XBX file in the persistent data area on the hard disk drive 208. The MENU.XBX file contains the following information:

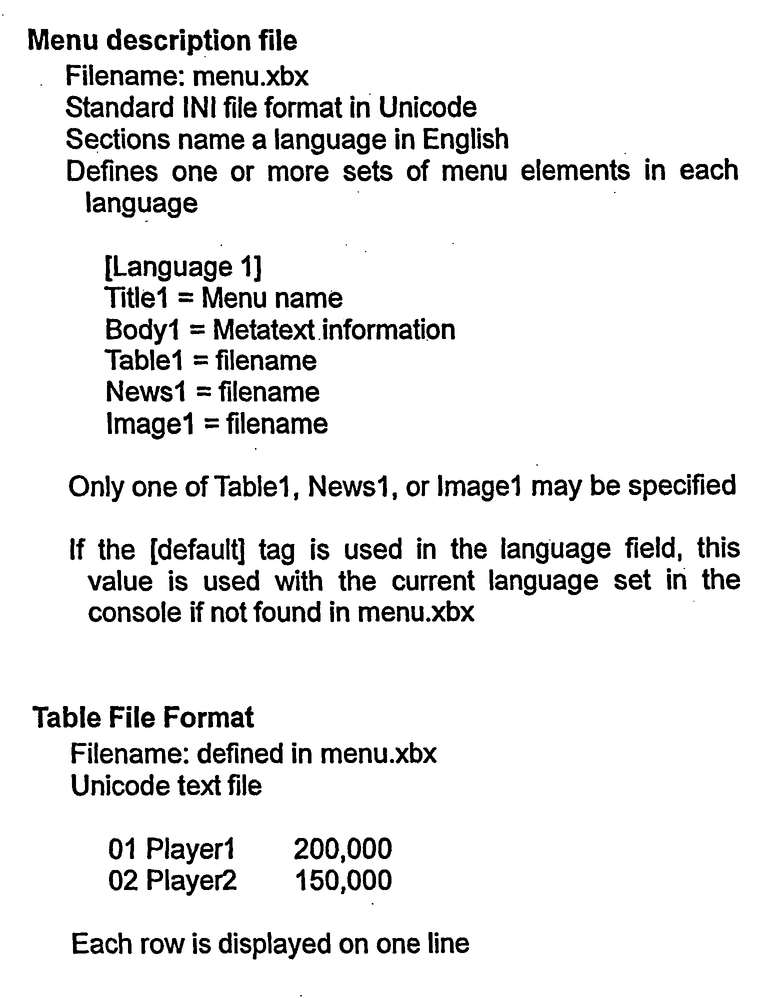

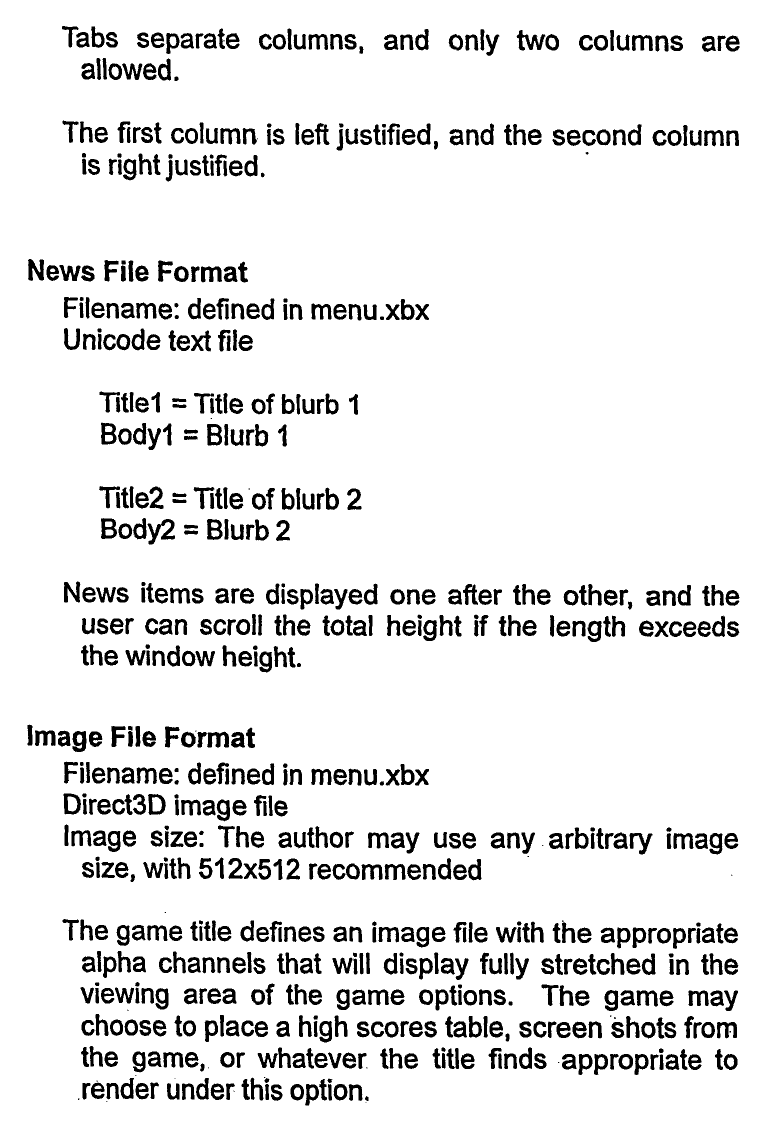

With reference again to the main menu navigation process 800 of Fig. 8, suppose that the user does not select the games element 702 in the main menu UI 700 (i.e., the "No" branch from block 802). At block 806, the console UI application 260 ascertains whether the music element 704 is selected. If it is (i.e., the "Yes" branch from block 806), the console UI application 260 navigates to the music collection 406 and presents a music collection menu (block 808).

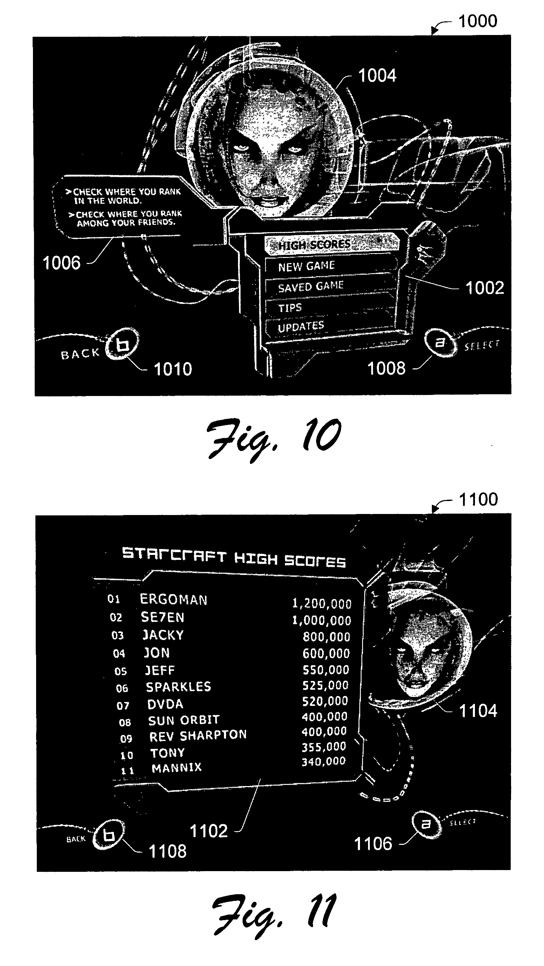

Fig. 12 illustrates an exemplary music collection menu 1200 that is presented upon selection of the music element 704 in the main menu UI 700 (Fig. 7). The music collection is the area where the user can select from available audio discs in the portable media drive 106 as well as soundtracks they have previously created and stored on the hard disk drive 208. The music collection menu 1200 includes a list 1202 of the available audio discs in the portable media drive (if any) and soundtrack files on the hard disk drive. An example of a suitable audio disc is a Redbook audio CD (compact disc). An example of a suitable soundtrack file is one or more WMA files.

An orb 1204 contains a graphic of the currently selected audio item and a metatext panel 1206 posts information about the current audio element. As the user navigates over the list 1202 of the available audio discs and soundtracks, corresponding summary information is posted in the metadata panel 1206. The -following information is displayed for the currently selected audio CD or soundtrack:
- Name of the audio element as it appears in the list
- Total number of tracks
- Total playing time for the audio element in minutes and seconds

In this example, the audio CD is highlighted in list 1202 and hence a CD image is presented in orb 1204. As indicated by the metatext panel 1206, the audio CD is the 14-track album "Earthling" by David Bowie. When network access is available, artist and other information can be pulled from online services over the Internet at any time.

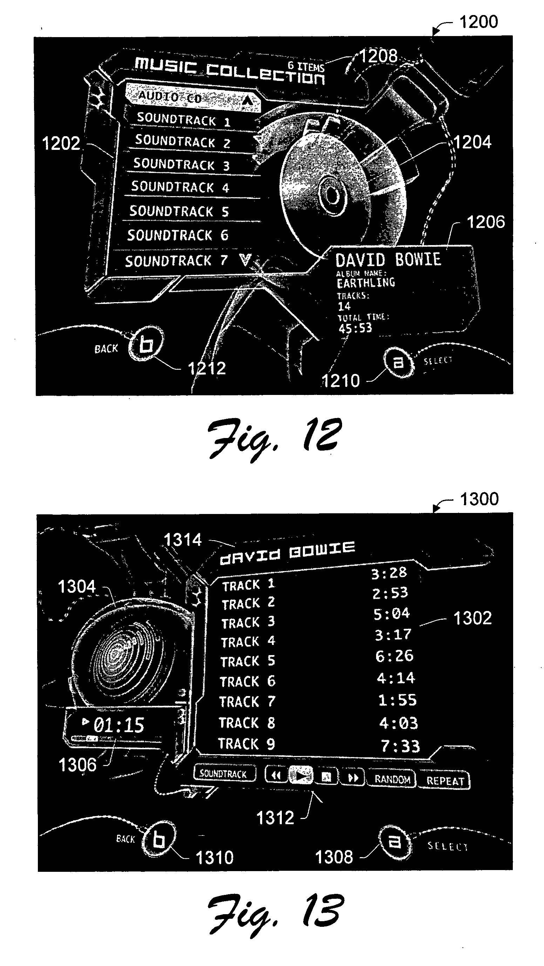

Descriptive text 1208 (i.e., "n items") is positioned beside the main legend "Music Collection" to indicate the number of titles in the music collection. The list 1202 displays a limited number of music titles (e.g., eight titles). When a user first enters the music collection after purchasing their console, there will be zero titles in the music collection (i.e., "0 items"). The music collection menu 1200 is bypassed and the user is navigated to the music player screen (shown and described below with respect to Fig. 13). The title of the music player screen is "no audio CD" and all of the playback buttons in the area are disabled. The user may only navigate back to the main menu 700 (Fig. 7).

If the user only has a single audio disc in the portable media drive, or a single soundtrack in the music collection, the user is automatically navigated past the music collection menu 1200 when coming from the main menu and is taken directly to the music player screen. As the user creates multiple soundtracks and stores them in the hard disk drive, the music collection menu 1200 is no longer bypassed, but instead presents the available titles in the list 1202. When the descriptive text 1208 indicates that there are more music titles than shown on list 1202 (e.g., n > 8), up/down scroll arrows are added to the list 1202 to represent that more titles are available.

The user can move among music titles in list 1202 by using the up and down directions of the joystick, or some other pre-defined control mechanism. The list 1202 may be configured to wrap or not wrap when the user reaches the top or the bottom of the list. A select element 1210 enables user selection of the highlighted title from list 1202 using the "A" button on the controller. Selection of a game title navigates the user to the music player menu. A back element 1212 facilitates navigation back to the main menu UI 700 by pressing the "B" button on the controller.

Fig. 13 illustrates an exemplary music player 1300 that is presented upon selection of a music title from menu 1200 (Fig. 12) or, where no music titles are listed, upon loading a music disc. The music player allows the user to play back the current audio disc in the portable media drive 106 or previously created soundtracks. Upon navigating into the music player 1300, any environmental background audio presented in earlier screens is stopped to give full attention to the media. Similarly, if the user navigates away from the music player while music is playing, the game console may be configured to stop the music playback automatically and resume the environmental background audio.

The music player 1300 includes a track list 1302 of the available audio tracks and corresponding track lengths, an orb 1304 that contains a radial spectrum analyzer (or other music related visual), and a status element 1306 that displays the current playback status and timeline of the -current track. During audio playback, the current track being played within the track list 1302 is highlighted. The status element 1306 renders the following information for the user:
- Current time within the current track
- Visual progress bar for the current track
- Simple playback icons to denote playback status (e.g., play, pause, stop, repeat, random)

The user can move among tracks in list 1302 by using the up and down directions of the joystick, or some other pre-defined control mechanism. A select element 1306 enables user selection of the highlighted track and back element 1308 facilitates navigation back to the music collection menu 1200.

A transport control panel 1310 is displayed along the bottom of the music player for playback control. The soundtrack name or the text "Audio CD" appears in the title area 1312 of the music player depending on the current playback media. When the user first navigates into the music player from the main menu or the music collection, the play button is in focus by default.

The transport control panel 1310 provides the following buttons for the user:
- Play-start or resume playing. The play button toggles to the "pause" button during playback.
- Stop - stops playing the current track and the playback position is reset to the beginning of the current track.
- Next Track - skip to the beginning of the next track. If random is enabled, skip to the next random track. Holding down the next track button scans the current track in the forward direction.
- Previous Track - skip to the beginning of the current track, and then to the previous track if the previous track button is hit again. If random is enabled, skip to the previous track in the random selection. Holding down the previous track button scans the current track in the reverse direction.
- Add to Soundtrack - navigates the user into the soundtrack creation tool with the current audio disc or soundtrack as the source. Any music playback stops when this button is pressed.
- More - provides users with audio playback functionality that is is beyond the basic scope of typical playback. The "more" button behaves as a toggle button, and when depressed, the following buttons are exposed in the music player:

- Random ― Toggle button that enables the random playback of tracks.
- Repeat ― Toggle button that enables the repeated playback of the track list. If random is also enabled, this continues to playback the random selection of tracks
- Move up ― Moves the track of a soundtrack that is currently selected up one position in the total list of tracks.
- Move down - Moves the track of a soundtrack that is currently selected down one position in the total list of tacks.
- Delete - Removes the currently selected track from the soundtrack.

Buttons on the game controller 104 may be mapped to the transport control buttons. For example, a white button on the controller might be mapped to the play/pause toggle button, the black controller button might be mapped to the stop button, the left trigger might be mapped to the previous track button, and the Right trigger might be mapped to the next track.

As noted above, users can create their own soundtracks from legitimate music sources. Soundtrack creation is a two-step process. The first step is to create a soundtrack or choose an existing one. The second step is to select the audio tracks to be added to the soundtrack.

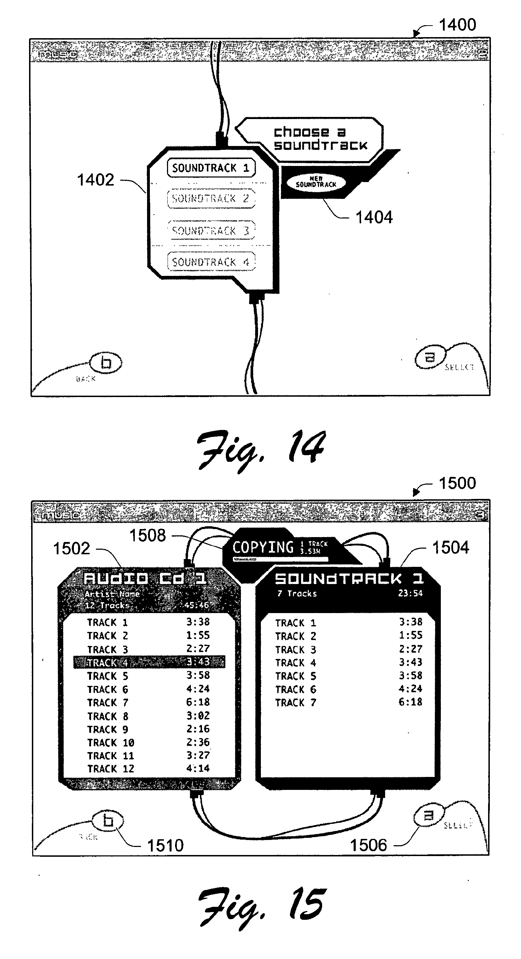

Fig. 14 illustrates an exemplary soundtrack selection screen 1400. It provides users with a list 1402 of all soundtracks available to the gaming system. Such soundtracks may be stored on the hard disk drive 208, a portable disc medium 108 in drive 106, a memory unit 140, or at remote storage 308 at an online source 304. If the user has created at least one soundtrack, the list 1402 depicts one or more placards of available soundtracks. A user entered name, or a default name "soundtrack 1", "soundtrack 2", etc., is shown on the placards. A "New Soundtrack" button 1404 is positioned beside the list to enable the user to create a new soundtrack. Upon selection of a soundtrack in the list 1402 or the "New Soundtrack" button 1404, the user is navigated to the track selection screen described below with respect to Fig. 15.

If the user has not yet created a soundtrack, the list of available soundtracks contains a single button entitled "New Soundtrack". Upon choosing the "New Soundtrack" button, the user is presented with an area for text entry and a virtual keyboard for typing a new name for the soundtrack. By default, the name given to the soundtrack will be "Soundtrack 1", but any keyboard input from the user will clear this default title with the entered name. Upon completion, the user is navigated to the track selection screen described next.

Fig. 15 illustrates an exemplary audio track selection screen 1500. It contains a list 1502 of available tracks (e.g., from an audio disc, or online source), and a corresponding list 1504 of tracks that are already in the soundtrack. The users can now choose a single track, or multiple tracks in the same selection model. Upon confirmation with the select element 1506, the selected tracks are transferred from the source to the soundtrack in a quick, modal operation. The user may cancel this operation once it has started, but all transfers for that selection will be lost. If a power off occurs in this scenario, it is treated as a cancel operation and all tracks are lost for that operation.

The screen 1500 further depicts a status area 1508 that lets the user know the progress of the total operation. Upon completion of the operation, the user navigates back to the music player 1300 via back element 1510.

WMA files for soundtracks are stored in a flat directory on the hard disk drive 208. This directory also contains a text data file that maintains a reference of all WMA files, as well as the soundtracks to which each WMA file belongs. Because the game console manages the soundtrack directory, it is possible to keep this data file up to date. An API (application program interface) may be used to allow a game to query such information as the list of available soundtracks, first file of a specific soundtrack, last file of a specific soundtrack, and next file in a specific soundtrack. '

With reference again to the main menu navigation process 800 of Fig. 8, suppose that the user selects neither the games element 702 nor the music element 704 in the main menu UI 700 (i.e., the "No" branch from block 806). At block 810, the console UI application 260 evaluates whether the movies element 706 is selected. If this element is selected (i.e., the "Yes" branch from block 810), the console UI application 260 navigates to the movies collection 408 and presents a movie player (block 812). Any environmental background audio is stopped to give full attention to the media.

The movie player is where the user plays back a movie, which may be stored on a video disc in the portable media drive 106, or as a file on the hard disk drive 208, or streamed from an online service 304. The movie player is a full screen playback area. A screen may be presented to notify the user of the following information.
• Current time within the movie
• Current chapter a DVD disc
• Playback icons to denote playback status (e.g., play, pause, stop, angle, repeat, random)

In addition to navigation from the main menu, placing a movie disc in the portable media drive 106 causes direct navigation to the movie player. As long as a movie disc resides in the drive, the full screen playback menu is maintained. If the user removes the disc during playback, or after the movie is over, the user is returned to the main menu 700 (Fig. 7).

The game console 102 may further be configured to implement certain movie playback rules. For example, one rule may be to stop the movie if it is paused for more than five minutes. Another rule may be that pressing stop during movie playback will cause the current position of the playback to be stored. If the user presses stop again, the position will be erased from memory. If the play button is pressed after a position is stored, the console will automatically resume playback from the stored position. The position persists if the disc is removed from the drive, but will be erased if a different disc is inserted.

Still another rule might be that pressing the scan button one or more times while the movie is playing will speed up the video by some predefined measures (e.g., one time results in a 2x speed increase, two times causes a 4x speed increase, three times causes an 8x speed increase, and so on). Pressing scan in the opposite direction will proportionally slow the video playback.

Another rule may be that pressing the scan button one or more times while the movie is paused will play the movie in a slower than normal speed by the predetermined measures (e.g., one time results in a 1/2x speed reduction, two times causes a 1/4x speed reduction, and so forth). Pressing scan in the opposite direction will proportionally speed the video playback until it returns to a paused state.

Pressing the play button when the video is paused or scanning will resume normal playback. When the video is playing, pressing the frame advance button will pause playback. Pressing this button a second time will advance the video one frame in the appropriate direction.

Buttons on the game controller 104 may be mapped to movie player functions. For example, a white button on the controller might be mapped to the play/pause toggle button, the black controller button might be mapped to the stop button, the left trigger might be mapped to the previous chapter, the Right trigger might be mapped to the next chapter, and the "A" button might be mapped to the on-screen status screen. If a dongle is plugged into the game console, a remote may be used to control the movie player.

With reference again to the main menu navigation process 800 of Fig. 8, suppose that the user fails to select the game, music, or movie elements in the main menu UI 700 (i.e., the "No" branch from block 810). At block 814, the console UI application 260 decides whether the memory element 708 is selected. If so (i.e., the "Yes" branch from block 814), the console UI application 260 navigates to the memory area 416 and presents a memory collection menu (block 816).

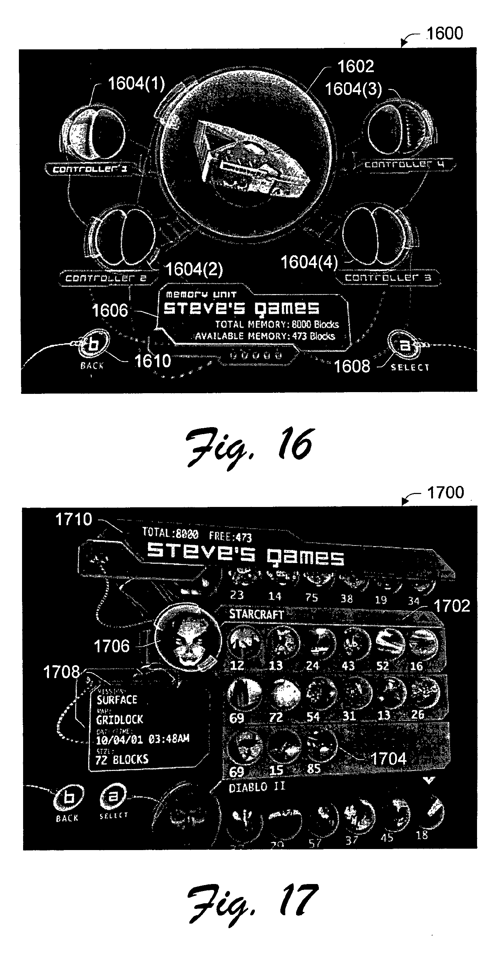

Fig. 16 illustrates an exemplary memory collection menu 1600 that is presented in response to selection of the memory element 708 in main menu 700. The memory collection area identifies the memory devices that are currently accessible by the game console and able to store data. The memory collection area further presents properties of the various memory devices and facilitates memory management of the devices.

The memory collection menu 1600 includes a central orb 1602 with an image of the game console. Controller pods 1604(1)-1604(4) surround the central orb 1602 to demonstrate any connected memory units 140 that might be inserted into controllers 104 and hence form part of the memory space. The orbs and pods representative of memory devices visually convey an amount of capacity available for storage.

In the described implementation, each of the four controller pods 1604 has two spheres to represent the three situations where 0, 1, or 2 memory units are inserted. Each sphere applies a visual cue to inform the user of approximately how full or empty the memory unit is. Thus, if the controller has one memory unit that is three-quarters full and a second memory unit that is empty, a first sphere may be shaded three-quarters and the second sphere may be left unshaded. Memory units being added or removed while the memory collection screen 1600 is present will be dynamically reflected in the screen.

The memory collection screen 1600 also has a metatext panel 1606 that displays information pertaining to the currently highlighted memory device. Such information might include the following information:
- Textual description of the selected memory device (hard disk drive, memory unit)
- Friendly name and location of the memory device (memory unit A, Steve's MU)
- Total storage space available on the device in blocks
- Total storage space left on the device in blocks

The storage space representation for all data on the hard disk and memory units is in blocks. In one implementation, the block size is 16K bytes. For a memory unit of 8Mbytes, there are 500 blocks. For an 8Gbytes hard disk, there are 500,000 blocks.

The user navigates among the memory devices by using up, down, left, and right directions of the joystick, or some other pre-defined control mechanism. A select element 1608 and a back element 1610 are also provided to enable navigation from the memory collection screen 1600.

Fig. 17 shows an exemplary memory contents menu 1700, that is presented upon selection of a memory device in the memory collection screen 1600. The memory contents menu 1700 provides a view of all content data that is currently available on the selected memory device. It is noted that in the situation where the user navigates into the memory area from the main menu 700 and no memory units are connected to the console, the console UI application automatically navigates to the memory contents menu 1700, bypassing the memory collection screen 1600, to depict the data currently available on the hard disk drive 208.

The memory contents menu 1700 depicts a flat list 1702 of game titles and their corresponding saved games, soundtracks and their associated tracks, and video clips that are stored on the selected memory device. Each file is represented by small orbs 1704 arranged in horizontal panes. Each orb has an image that identifies the contents, such as a game image or the last scene before the game was saved. The file 1704 has a number associated with it that denotes the total size of the saved game in blocks.

The grouping and order of files are as follows:
- One pane is dedicated to the memory device. This allows users to select the device and perform operations such as "Erase" and "Personalize".
- N number of panes dedicated to game titles sorted in alphabetical order with their associated saved games. The saved games are sorted by most recently saved within each game title.

In the games context, the list of files are formatted such that the game graphic is situated in an orb 1706 located near the title of the game title (e.g., "Starcraft"). The orb 1706 is selectable and upon selection, performs a multi-select on all of the saved games for that title. Each saved game is selectable as well by navigating to the desired orb 1704. As before, navigation can be achieved by using the left, right, up, and down directions of the joystick, or other mechanism.

A metatext panel 1708 offers a richer description of the saved game, audio track, or video clip that is currently focused. This description might include the following information:
- Saved Game
   - 2D image associated with the saved game
   - Game title the saved game belongs to
   - Saved game name
   - Date and Time the game was saved
   - Total size of the saved game
- Multiple Saved Games
   - Generic image representing multiple saved games
   - Total size of all of the currently selected saved games
- Game Title
   - 2D image associated with the game title
   - Name of the game title
   - Total number of saved games
   - Total size in blocks of the game title (sum of saved games, persistent data, etc.)

Atop title pane 1710 provides the summary information, such as a friendly name of the storage device (e.g., "Steve's Games"), the memory device's total storage space in blocks, and the memory device's storage space left in blocks. Select and back elements support navigation to other screens.

When the user saves a game to the hard disk drive, a number of metadata elements are copied down into the directory for that saved game. The information that is saved includes:
- A 256x256 pixel Direct3D texture image that accurately represents the saved game. This filename will always have the same name for every saved game. If a game wishes to share a common image between saved games, it is possible to save the meta.img file to the root of the saved games, and as the directories are polled for images, those directories without saved game images will default to the root's meta.img.
- A text file that contains a saved game name pair. The format for this file follows:

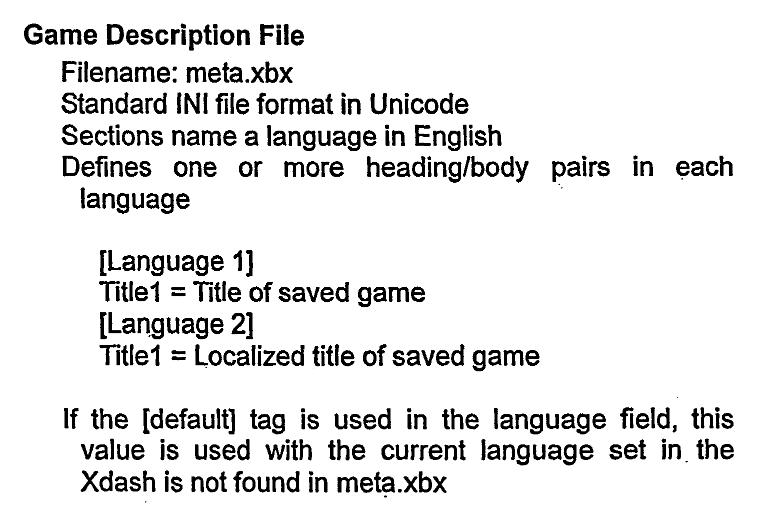

The user may select more than one saved game at a time. In one implementation, the user focuses on multiple orbs 1704 using, for example, by a controller button mapped to a multi-select operation. If *n* files are highlighted and the user commits the set of selected files while currently on a selected file, every selected file including the one currently in focus is selected. If *n* files are highlighted and the user commits the set of selected files while not currently on a selected file, the selection is cancelled and the current file in focus is single selected. Using the multi-select button on an object that is already selected will deselect the object. The user can potentially select every object on a memory device of the same object type.

During a multi-select operation, the user is presented with a subset of the information about the files in the information area. The information displayed about the files during a multi select includes the number of files and the total size of the selected files.

The multi-select operation is type specific, restricting users to select only similar media types. For example:
- If the first object chosen is a saved game, every subsequent multi select is restricted to a saved game until committed.
- If the first object chosen is a game title, every subsequent multi select is restricted to a game title until committed.
- If the first object chosen is a soundtrack, every subsequent multi select is restricted to a soundtrack until committed.
- If the first object chosen is a song, every subsequent multi select is a song until committed.

Attempting to multi select another file type, after a multi select has already been initiated, will not select the new type nor dismiss the current selection.

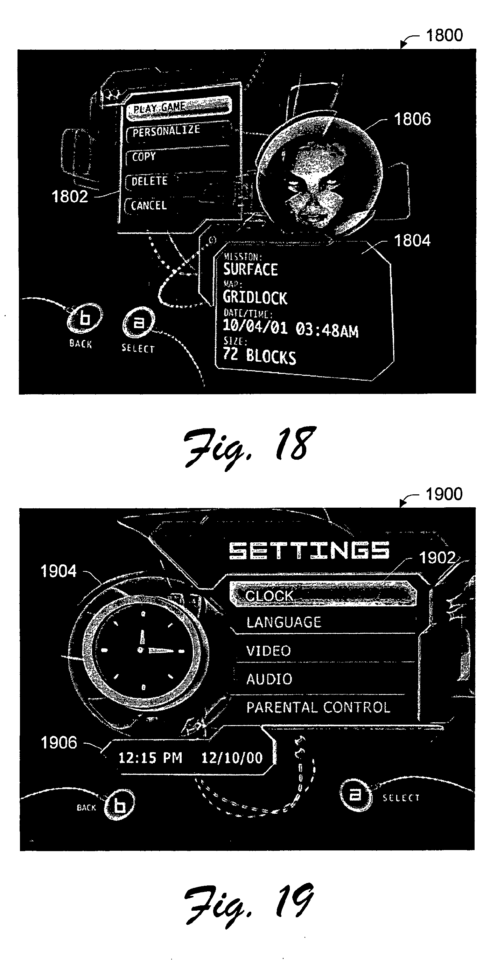

Fig. 18 shows an exemplary files options menu 1800 that is depicted upon -selection of a file from-the memory contents menu 1700 (Fig. 17). The file options menu 1800 identifies options that are available based on the current selection of files. The menu 1800 includes a list 1802 of file actions that are currently available, a metatext panel 1804 containing summary information pertaining to the file(s), and an orb 1806 containing an image of the file's associated metadata image. The summary information and metadata image are the same as shown in the memory contents menu 1700 to provide consistent themes from menu to menu.

As noted above, the options vary according to the selection made. If a memory device is selected, the file action list 1802 includes the following options:
- Personalize: This option allows the user to create a custom name for the selected memory device. The user is presented with a message window containing the current name of the device, and can overwrite this using a virtual keyboard. Upon completion, the new device name is reflected in the memory collection, as well as the device's memory area.
- Erase: After a warning and confirmation from the user, this option removes all titles, soundtracks, and associated data completely from the current memory device. The user is then returned to the memory contents menu 1700.

If a game title is selected, the file action list 1802 includes the following options:
- Copy: All saved games for the selected title are brought back out to the memory collection screen 1600. Once at this screen, the user is able to select from any of the other available memory devices other than the source memory device they are copying from. In one implementation, an icon associated with the title is placed in the current memory location (e.g., on the hard disk drive) to represent the current collection of saved games. The user can copy that file to another memory device (e.g., a portable memory unit) by dragging an icon associated with the file from the central orb 1602 to the appropriate memory pod 1604 or highlighting the memory pod 1604 and initiate the copy operation (e.g., with the "select" element). The files are copied to the target memory device in a modal operation. Upon completion, the user is returned to the memory device they were previously in with no files in selection, and the first file in focus. If there are no other memory devices available beyond the hard disk drive, the copy option is disabled.
- Delete: After a warning and confirmation from the user, all titles saved games are removed from the current memory device. The user is returned to the memory contents menu 1700.

If one or more saved games are selected, the file action list 1802 includes the following options:
- Play: A message window notifies the user to place the appropriate game disc in the portable media drive, and the tray is opened. Upon insertion, the title automatically launches into the previously selected saved game. If the user accidentally inserts the incorrect disc, the title will load normally and the instruction to immediately start a previously saved game is ignored.
- Copy: The saved game is brought back out to the memory device collection screen 1600. Here, the user is able to select from any of the other available memory devices other than the source memory device they are copying from. In this view, the current collection of saved games is represented, and when the user initiates the copy, the files are copied to the device in a modal operation. Upon completion, the user is returned to the memory device they were previously in with no files in selection, and the first file in focus. If there are no other memory devices available beyond the hard disk drive, the copy option is disabled.
- Delete: After a confirmation from the user, the saved game is removed from the current memory device. The user is returned to the memory contents menu 1700.

Once an operation is initiated, it is modal and the user cannot navigate away while the operation is occurring. Also, because of unexpected results after an operation has partially completed, an operation cannot be canceled once initiated.

If a copy operation is attempted with a group of files that are too large for the destination memory device, the user is notified of the problem in the memory collection screen 1600 when choosing the memory device. The user has the opportunity to select another device, or select the back element to return to the source device with all of the previously selected files still in focus.

If a notification for a power down occurs during one of the following operations, the process cancels and transitions to a state where it is safe to shut down. If the operation was a copy, the process does not reflect a copy to the user next time they reenter the game console UI. If the operation was a delete and a partial set of the files were removed, the remaining files marked for delete should be removed at the next power up of the console. The same states remain true if a memory device was removed during an operation.

With reference again to the main menu navigation process 800 of Fig. 8, suppose that the user fails to select the memory element 708 in the main menu UI 700 (i.e., the "No" branch from block 814). At block 818, the console UI application 260 decides whether the settings element 710 is selected. If it is (i.e., the "Yes" branch from block 818), the console UI application 260 navigates to the settings area 418 and presents a settings collection menu (block 820).

Fig. 19 illustrates an exemplary settings collection menu 1900 that is presented upon selection of the setting element 710 in main menu 700 (Fig. 7). The settings collection menu 1900 provides a preview of currently set options and mechanisms for adjusting the settings. The settings collection menu 1900 includes a list 1902 of the available settings, an orb 1904 containing an image of the currently selected setting, and a preview panel 1906 for displaying the currently set value of the setting.

In the illustrated example, the available settings include:
- Clock - The date and time are displayed in the preview panel.
- Language - The currently set language is displayed in the preview panel.
- Audio - The audio connection information is displayed in the preview panel.
- Video - The video format information is displayed in the preview panel.
- Parental Control - A small sentence noting if parental controls are enabled is displayed in the preview panel.

The settings collection menu 1900 is designed to behave as a view on the currently set values. The user can navigate through the list 1902 by using the up and down directions of the joystick (or other directions or mechanism). By selecting an element from the settings menu, the user is taken to another menu to adjust the value.

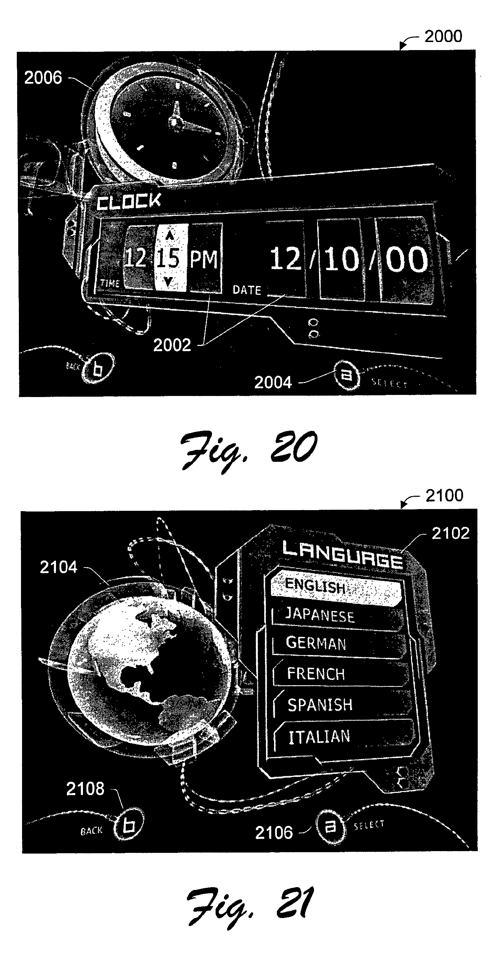

Fig. 20 is an exemplary clock settings menu 2000 that is presented upon selection of the "clock" option from list 1902 of the settings collection menu 1900 (Fig. 19). The clock settings menu allows the user to adjust the currently set date and time. The clock settings menu 2000 includes individual panes 2002 that can be independently selected and changed as desired. The user can move along the panes 2002 using the left and right directions of the joystick, while the up and down will cycle through the available values within each pane. Selection is confirmed by actuation of select element 2004.

A pod 2006 is also presented to render a preview of a "real" world clock or calendar based on the users current settings. The arrangement, separators, and use of 24-hour versus 12-hour time are configurable parameters.

In one implementation, the ranges of each setting are defined as follows:
- Hours cycle from 1 to 12 (or 0 to 23). Incrementing 12 (23) returns the value to 1 (0). Decrementing 1 (0) returns the value to 12 (23).
- Minutes cycle from 00 to 59, and wraps appropriately.
- AM/PM range toggles.
- Month cycles from 1 to 12, and wraps appropriately.
- Days cycles from 1 to the appropriate number of days in the selected month. When February is selected the day can go to 29 even in non-leap years. If the user selects February 29 and then selects a non-leap year, the console UI will select February 28. In general, if the user selects a day that becomes invalid due to a change in the month or year setting, it will be changed to the highest valid number.
- Year cycles from 00 to 99, and wraps appropriately. The years map to 2000 - 2099.

Where an online connection is established, the game console may be configured to update the clock automatically based on a time/date value from an online source.

Fig. 21 is an exemplary language settings menu 2100 that is presented upon selection of the "language" option from list 1902 of the settings collection menu 1900 (Fig. 19). The language settings menu 2100 includes a list 2102 of the available languages, and an orb 2104 with an image of the earth for aesthetics and association. In the illustrated example, the languages in list 2102 include English, Japanese, German, French, Spanish, and Italian. Although not shown here, each language is preferably rendered in its native language to clear up ambiguity for users presented with this screen.

The user can traverse the list by using up and down directions of the joystick, or some other suitable control mechanism. The select element 2106 commits a change and navigates the user back to the settings collection menu 1900. The back element 2108 navigates the user back to the settings collection menu 1900, canceling any changes that were made.

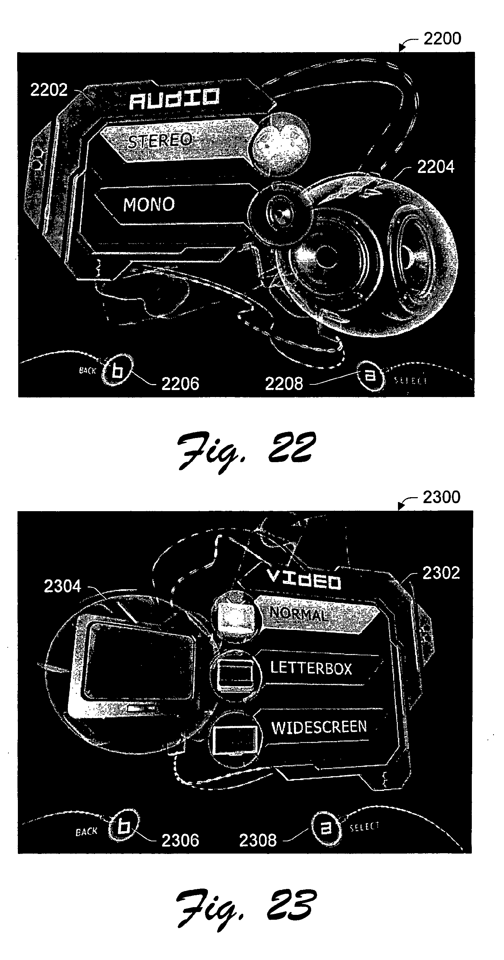

Fig. 22 illustrates an exemplary audio settings menu 2200 that is presented upon selection of the "audio" option from list 1902 of the settings collection menu 1900 (Fig. 19). The audio settings menu allows users to choose between the different audio output modes based on current A/V capabilities. The audio settings menu 2200 includes a list 2202 of the available audio options, and an orb 2204 that graphically represents a selected option. For example, one speaker is illustrated in orb 2204 when mono is focused and two speakers are depicted when stereo is highlighted.

For standard NTSC and PAL packs, the available audio options are:
- Mono - [Analog out mono signal]
- Stereo - [Analog out stereo signal enhanced for front center speakers]
- Dolby Pro Logic - [Analog out Dolby Pro Logic signal]

For enhanced A/V packs with digital out, the available audio options include:
- Mono - [Analog out mono signal][Headphone out mono signal][Digital out mono PCM signal]
- Stereo - [Analog out stereo signal][Headphone out stereo signal][Digital out stereo PCM signal]
- Dolby Pro Logic - [Analog out Dolby Pro Logic signal][Headphone out Dolby Pro Logic signal][Digital out Dolby Pro Logic PCM signal]
- Dolby Digital - [Analog out stereo signal][Headphone out stereo signal][Digital out Dolby Digital]

Similar navigation controls navigate over the list 2202. Selecting the back element 2206 navigates the user back to the settings collection menu 1900, canceling any changes that were made. Selecting the select element 2208 commits the change and the audio settings are changed as the user navigates back to the settings collection menu 1900.

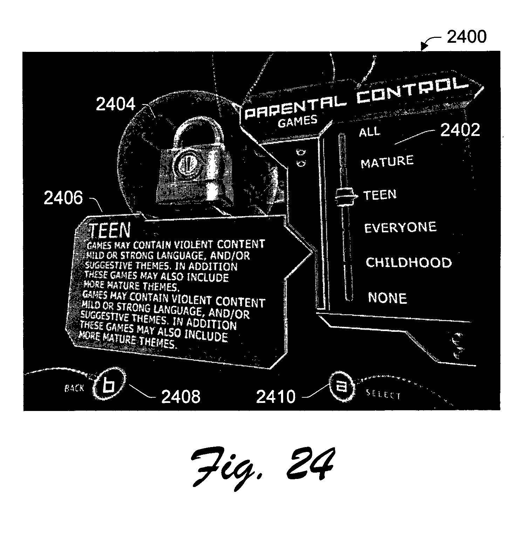

Fig. 23 shows an exemplary video settings menu 2300 that is presented upon selection of the "video" option from list 1902 of the settings collection menu 1900 (Fig. 19). The video settings menu allows users to choose between different video display modes. The video settings menu 2300 includes a list 2302 of available video modes and an orb 2304 that gives an abstract view of the selected option. Availability of modes is based on the A/V capabilities, but such modes may include normal (4:3), letterbox (4:3), and widescreen (16:9). If it supports HDTV (High Definition TV), the console supports a resolution up to 704x480.

The user can navigate the list 2302 by moving the joystick up and down. The back button 2306 navigates the user back to the settings collection menu 1900, canceling any changes that were made. The select button 2308 commits the change and the video settings are changed, as the user is navigated back to the settings collection menu 1900.

Fig. 24 illustrates an exemplary parental control settings menu 2400 that is presented upon selection of the "parental control" option from list 1902 of the settings collection menu 1900 (Fig. 19). The parental control settings menu provides a mechanism for blocking specific content. The parental control settings menu 2400 includes a content filter control 2402 in the form of a slider that can be moved to select different levels of filtering based upon the age-appropriateness of the audience. In Fig. 24, the filter control 2402 ranges from filtering "All" content to "None" of the content, with intermittent levels of "Childhood", "Everyone", "Teen", and "Mature". An orb 2404 portrays a graphic that indicates whether the filter is set (e.g., a lock) or not.

A metatext panel 2406 provides a summary of the filtering that occurs at the corresponding highlighted level. Here, the panel 2406 describes the filter for the "Teen" level. The back button 2408 navigates the user back to the settings collection menu 1900, canceling any changes that were made. The select button 2410 commits the change and the video settings are changed, as the user is navigated back to the settings collection menu 1900.

It is noted that the filter levels may change depending upon the media type under review. Fig. 24 shows the parental control options for games. A different set of options may be presented for movies and music. Furthermore, the options may vary for different countries.

In one implementation, the parental control setting options depend on the user's region code and the host country's rules against game and movie ratings. The following outlines a parental control process if no control has yet been set:
1) Country - The user is presented with a list of countries available for their specific game region. (For example, in the North America game region, the user can choose between 'United States', 'Canada', and 'Mexico)
2) Game content (if applicable to the chosen country) - The user is allowed to choose between the available game ratings for their country. For those countries without a game ratings system, an All/None option is presented.
3) Movie content (if applicable to the chosen country) - The user is given the opportunity to choose between the available movie ratings for their country. For those countries without a movie ratings system, an All/None option is provided.
4) Online content - The user is permitted to elect an online level for filtering content from online sources.
5) Set password - The user is asked to enter a four action password, and after a confirmation is returned to the main settings menu.

If the user sets the game, movie and online content to "All", the password screen is bypassed and the parental controls are disabled. If the parental control has been set, and the user may change the parental control by:
1) Parental control password - The user is first verified as the appropriate person to change the controls. The user is presented with a screen and given one chance to enter the correct password. If the incorrect password is entered, the user is navigated back to the main settings menu after briefly depicting an "Incorrect Password" message.
2) If the password is correct, the above five-step procedures is repeated as if setting for the first time, except that the values are defaulted to a previous setting.

### Conclusion

Although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A game console, comprising:
a memory;
a processor coupled to the memory; and
a console application stored in the memory and executable on the processor, the console application presenting a user interface to facilitate access to multiple different media types.

2. A game console as recited in claim 1, wherein the memory comprises a hard disk drive.

3. A game console as recited in claim 1, wherein the media types are selected from a group of media types comprising game data, audio data, and video data.

4. A game console as recited in claim 1, wherein at least one media type is stored remotely from the game console.

5. A game console as recited in claim 1, wherein the user interface comprises a main menu that includes selectable elements for each of the media types.

6. A game console as recited in claim 5, wherein the user interface comprises a games collection menu that is presented upon selection of a selectable element in the main menu that relates to a game media type, the games collection menu identifying currently available games.

7. A game console as recited in claim 5, wherein the user interface comprises a music collection menu that is presented upon selection of a selectable element in the main menu that relates to an audio media type, the music collection menu identifying currently available music.

8. A game console as recited in claim 5, wherein the user interface comprises a movie collection menu that is presented upon selection of a selectable element in the main menu that relates to a video media type, the movie collection menu identifying currently available movies.

9. A game console as recited in claim 1, wherein the console application defines a navigation hierarchy comprising:
a main menu that includes selectable elements for each of the media types; and
multiple collection menus presented upon selection of corresponding selectable elements in the main menu, each collection menu identifying content available for an associated media type.

10. A game console as recited in claim 1, further comprising:
a portable media drive configured to communicate with a portable memory device that stores a particular media type; and
the user interface being configured to facilitate access to media types other than the particular media type stored in the portable media drive.

11. A game console as recited in claim 1, further comprising:
a portable media drive configured to communicate with a portable memory device;
one or more portable memory units; and
the game console being configured to present a user interface identifying the memory, the portable memory device, and the memory units that are available for storage of user data.

12. A game console as recited in claim 1, wherein the user interface comprises a parental control settings menu that allows a user to set various content filter levels for the different media types.

13. A game console, comprising:
an integrated hard disk memory that stores instructions required for running games on the game console;
a processor coupled to the hard disk memory; and
a console application stored in the hard disk memory and executed on the processor.

14. A game console as recited in claim 13, wherein the console application presents a user interface to facilitate access to multiple different media types.

15. A game console as recited in claim 13, wherein the console application presents a user interface identifying contents of the hard disk drive.

16. A game console as recited in claim 13, wherein the console application defines a navigation hierarchy comprising:
a main menu that includes selectable elements for corresponding media types; and
multiple collection menus presented upon selection of corresponding selectable elements in the main menu, each collection menu identifying content available for an associated media type.

17. A game console as recited in claim 13, wherein the console application presents a user interface comprising:
a main menu that identifies different media types;
a games collection menu selectable from the main menu to identify one or more game titles that are currently available to play;
a music collection menu selectable from the main menu to identify one or more music titles that are currently available to play; and
a movie collection menu selectable from the main menu to identify one or more movie titles that are currently available to play.

18. A game console as recited in claim 17, wherein the user interface further comprises a memory collection menu selectable from the main menu to identify the hard disk memory and any other memory devices available for storage of user data.

19. A game console as recited in claim 17, wherein the user interface further comprises a games option menu selectable from the games collection menu to offer options pertaining to a selected game title.

20. A game console as recited in claim 17, wherein the user interface further comprises a music player menu selectable from the music collection menu to facilitate playback of a selected music title.

21. A game console as recited in claim 17, wherein the user interface further comprises a movie player selectable from the music collection menu to facilitate playback of a selected movie title.

22. A game console, comprising:
a portable memory drive configured to communicate with a portable memory device that stores a first media type, the first media type being one of game media, music media, or movie media;
a memory configured to store a second media type, the second media type being one of game media, music media, or movie media;
a processor coupled to the portable memory drive and the memory; and
a user interface to facilitate user selection of the first and second media types.

23. A game console as recited in claim 22, wherein the memory comprises a hard disk drive.

24. A game console as recited in claim 22, wherein the memory comprises a portable memory unit.

25. A game console as recited in claim 22, wherein the memory is configured to store both the first and second media types.

26. A game console as recited in claim 22, wherein the first and second media types are selected from a group of media types comprising game data, audio data, and video data.

27. A game console as recited in claim 22, wherein the user interface comprises a graphical user interface that identifies the first and second media types.

28. A game console as recited in claim 22, wherein the user interface comprises a graphical user interface identifying contents of the portable memory drive and the memory.

29. A game console as recited in claim 22, wherein the user interface comprises a graphical user interface comprising:
a main menu that identifies the game media type, the music media type, and the movie media type;
a games collection menu selectable from the main menu to identify one or more game titles of the game media type that are currently available to play;
a music collection menu selectable from the main menu to identify one or more music titles of the music media type that are currently available to play; and
a movie collection menu selectable from the main menu to identify one or more movie titles of the movie media type that are currently available to play.

30. A game console as recited in claim 29, wherein the user interface further comprises a graphical user interface comprising:
a games option menu selectable from the games collection menu to offer options pertaining to a selected game title;
a music player menu selectable from the music collection menu to facilitate playback of a selected music title; and
a movie player selectable from the music collection menu to facilitate playback of a selected movie title.

31. A game console, comprising:
a memory;
a processor coupled to the memory; and
a user interface application stored in the memory and executed on the processor to present a main menu for navigating to one of a games area pertaining to gaming media, a music area pertaining to audio media, and a movie area pertaining to video media.

32. A game console as recited in claim 31, wherein the memory comprises a hard disk drive.

33. A game console as recited in claim 31, further comprising:
a portable media drive configured to communicate with a portable memory device that stores one media type from the gaming media, the audio media, or the video media; and
the user interface application being configured to facilitate access to another media type besides said one media type stored on the portable memory device.

34. A game console as recited in claim 31, wherein the memory comprises a hard disk drive, the game console further comprising:
a portable media drive configured to communicate with a portable memory device;
one or more memory units; and
the user interface application being configured to present a memory collection menu identifying the hard disk drive, the portable memory device, and the memory units that are available for storage of user data.

35. A game console, comprising: one or more memory devices;
a processor; and
a user interface application stored in the memory and executed on the processor to present a memory collection menu that identifies the one or more memory devices that are available for storage of user data.

36. A game console as recited in claim 35, wherein the user interface application facilitates memory management of the one or more memory devices.

37. A game console as recited in claim 35, wherein the memory collection menu contains graphical elements representative of the one or more memory devices, the graphical elements being depicted in a manner that visually conveys an amount of capacity available for storage.

38. A game console as recited in claim 35, wherein the memory collection menu contains graphical elements representative of the one or more memory devices, the graphical elements being depicted with a gauge to denote amounts of filled and unfilled storage space.

39. A game console as recited in claim 35, wherein the memory collection menu allows user selection of a particular memory device, such that upon selection, the user interface application presents a memory contents menu that identifies contents of the selected memory device.

40. A game console as recited in claim 39, wherein the memory contents menu identifies multiple saved games pertaining to a single game title previously played on the game console and facilitates user selection of a saved game.

41. A game console as recited in claim 39, wherein the memory contents menu identifies multiple saved games pertaining to a single game title previously played on the game console and facilitates user selection of multiple saved games.

42. A game console as recited in claim 35, wherein the user interface application facilitates copying of contents from one memory device to another memory device.

43. A game console as recited in claim 35, wherein the memory collection menu contains first and second graphical elements representative of at least first and second memory devices, the user interface application being configured to facilitate movement of a file stored on the first memory device to the second memory device by dragging an icon associated with the file from the first graphical element to the second graphical element.

44. A game console, comprising:
one or more memory devices; and
a portal architecture to facilitate access to content stored on the memory devices, the portal architecture portraying the content according to media types of the content.

45. A method comprising:
booting into a console application stored on a hard disk memory of a game console; and
presenting a user interface to facilitate access to multiple different media types.

46. A method as recited in claim 45, wherein the media types are selected from a group of media types comprising game data, audio data, and video data.

47. A method as recited in claim 45, wherein the presenting comprises presenting a graphical user interface with selectable elements for each of the media types.

48. A method as recited in claim 45, further comprising navigating to one of multiple menus, where individual menus are associated with a particular media type.

49. A method as recited in claim 48, further comprising presenting a games collection menu that identifies games currently available for playing on the game console.

50. A method as recited in claim 48, further comprising presenting a music collection menu that identifies music currently available for playing on the game console.

51. A method as recited in claim 48, further comprising presenting a movie collection menu that identifies movies currently available for playing on the game console.

52. A method as recited in claim 45, further comprising presenting a memory contents menu that identifies contents stored on the hard disk memory.

53. A method as recited in claim 45, further comprising presenting a parental control settings menu that allows a user to set various content filter levels for the various media types.

54. One or more computer-readable media comprising computer-executable instructions that, when executed, perform the method as recited in claim 45.

55. A method comprising:
presenting a main menu for a game console that identifies different media types that may be played by the game console, the media types including a game media type, a music media type, and a movie media type;
upon selection of the game media type, navigating to a games collection menu that identifies one or more game titles that are currently available to play;
upon selection of the music media type, navigating to a music collection menu that identifies one or more music titles that are currently available to play; and
upon selection of the movie media type, navigating to a movie collection menu that identifies one or more movie titles that are currently available to play.

56. A method as recited in claim 55, further comprising, upon selection of a game title from the game collection menu, navigating to a menu to play the selected game title.

57. A method as recited in claim 55, further comprising, upon selection of a music title from the music collection menu, navigating to a menu to play the selected music title.

58. A method as recited in claim 55, further comprising, upon selection of a movie title from the movie collection menu, navigating to a menu to play the selected movie title.

59. A method as recited in claim 55, wherein the game console has one or more memory devices, further comprising presenting a memory collection menu that identifies the one or more memory devices that are available for storage of user data.

60. A method as recited in claim 59, further comprising, upon selection of a memory device from the memory collection menu, navigating to a memory contents menu that identifies contents of the selected memory device.

61. One or more computer-readable media comprising computer-executable instructions that, when executed, perform the method as recited in claim 55.

62. A method comprising:
presenting a memory collection menu that identifies one or more memory devices on a game console that are available for storage of user data; and
upon selection of a memory device, presenting a memory contents menu identifying contents of the selected memory device.

63. A method as recited in claim 62, further comprising facilitating, from the memory collection menu, memory management of the one or more memory devices.

64. A method as recited in claim 62, further comprising depicting, as part of the memory collection menu, graphical elements representative of the one or more memory devices in a manner that visually conveys an amount of capacity available for storing user data.

65. A method as recited in claim 62, further comprising listing, in the memory contents menu, multiple saved games pertaining to a single game title that have been previously played on the game console.

66. A method as recited in claim 65, further comprising facilitating, from the memory contents menu, selection of a set of two or more saved games for continued playing.

67. One or more computer-readable media comprising computer-executable instructions that, when executed, perform the method as recited in claim 62.

68. A method comprising:
storing multiple saved games of a single game title on a hard disk drive integrated into a game console; and
facilitating selection of multiple saved games for play on the game console.

69. A method comprising:
storing multiple media types on one or more memory devices of a game console; and
presenting a user interface that portrays content of the game console according to the media types.

70. A user interface for a game console, comprising:
a main menu configured to identify different media types that may be played by the game console, the media types including a game media type, a music media type, and a movie media type;
a games collection menu accessible from the main menu to identify one or more game titles that are currently available to play on the game console;
a music collection menu accessible from the main menu to identify one or more music titles that are currently available to play on the game console; and
a movie collection menu accessible from the main menu to identify one or more movie titles that are currently available to play on the game console.

71. A user interface as recited in claim 70, further comprising a games option menu accessible from the games collection menu to offer options pertaining to a particular game title.

72. A user interface as recited in claim 71, further comprising one or more extensible menus accessible from the games option menu to provide information regarding the particular game title.

73. A user interface as recited in claim 70, further comprising a music player menu accessible from the music collection menu to facilitate playback of a particular music title.

74. A user interface as recited in claim 73, further comprising one or more soundtrack creation menus accessible from the music player menu to create a soundtrack from one or more tracks of music.

75. A user interface as recited in claim 70, further comprising a movie player menu accessible from the movie collection menu to facilitate playback of a particular movie title.

76. A user interface as recited in claim 70, further comprising a memory collection menu accessible from the main menu to identify one or more memory devices of the game console.

77. A user interface as recited in claim 76, further comprising a memory contents menu accessible from the memory collection menu to identify contents of the selected memory device.

78. A user interface as recited in claim 70, further comprising a settings collection menu accessible from the main menu to offer system level options for operating the game console.

79. A user interface as recited in claim 78, further comprising a clock settings menu accessible from the settings collection menu to facilitate adjustment of a system clock in the game console.

80. A user interface as recited in claim 78, further comprising a language settings menu accessible from the settings collection menu to facilitate adjustment of a language used in the game console.

81. A user interface as recited in claim 78, further comprising an audio settings menu accessible from the settings collection menu to facilitate user selection of an audio mode.

82. A user interface as recited in claim 78, further comprising a video settings menu accessible from the settings collection menu to facilitate user is selection of a video mode.

83. A user interface as recited in claim 78, further comprising a parental control settings menu accessible from the settings collection menu to allow a user to set various content filter levels for the different media types.

84. A computer-readable medium for a game console comprising computer-executable instructions that, when executed, direct the game console to:
perform a set of system level checks to evaluate system parameters of the game console;
perform a set of media level checks to determine whether a recognizable media is loaded into the game console; and
load a console application that alternately presents (1) a main menu that facilitates access to multiple media-specific menus for different types of media and (2) a media-specific menu associated with the media loaded into the game console if the media is recognized.

85. A computer-readable medium as recited in claim 84, further comprising computer-executable instructions that, when executed, direct the game console to:
evaluate whether a hard disk drive in the game console is present;
evaluate whether a language for the game console is set; and
evaluate whether a clock for the game console is set.

86. A computer-readable medium as recited in claim 84, further comprising computer-executable instructions that, when executed, direct the game console to:
detect whether the media in the game console is a game disc;
detect whether the media in the game console is a movie disc; and
detect whether the media in the game console is an audio disc.
